Europäisches Patentamt

European Patent Office

Office européen des brevets

(11) Veröffentlichungsnummer: **0 103 709**
**B1**

(12) **EUROPÄISCHE PATENTSCHRIFT**

(45) Veröffentlichungstag der Patentschrift: 02.03.88

(51) Int. Cl.⁴: **H 04 N 3/22**

(21) Anmeldenummer: 83107426.5

(22) Anmeldetag: 28.07.83

(54) Schaltungsanordnung zur Korrektur von Ost-West-Kissenverzerrungen.

(30) Priorität: 16.09.82 DE 3234314

(43) Veröffentlichungstag der Anmeldung:
28.03.84 Patentblatt 84/13

(45) Bekanntmachung des Hinweises auf die
Patenterteilung:
02.03.88 Patentblatt 88/09

(84) Benannte Vertragsstaaten:
AT BE CH GB LI LU NL SE

(56) Entgegenhaltungen:
DE-A-2 809 198

(73) Patentinhaber: Deutsche Thomson-Brandt
GmbH
Hermann-Schwer-Strasse 3 Postfach 2060
D-7730 Villingen-Schwenningen (DE)

(72) Erfinder: Favreau, Jean-Claude
Am Mühlweiher 9
D-7730 VS-Tannheim (DE)
Erfinder: Hartmann, Uwe
Tallardstrasse 15
D-7730 Villingen-Schwenningen (DE)
Erfinder: Mai, Udo
Mühleschweg 2
D-7730 VS-Tannheim (DE)

EP 0 103 709 B1

Courier Press, Leamington Spa, England.

## Beschreibung

### Stand der Technik

Die Erfindung geht aus von einer Schaltung zur Korrektur von Ost-West-Kissenverzerrungen auf dem Bildschirm eines Fernsehempfängers mit einem Dioden-Modulator. Ein solcher Dioden-Modulator ist z.B. in der DE—C—20 31 218 ausführlich beschrieben. Der für die Korrektur oben genannter Kissenverzerrungen erforderliche Korrekturstrom wird über eine Einkoppelspule dem Dioden-Modulator zugeführt. Der Dioden-Modulator wird dabei mit Hilfe einer Stufe gesteuert, die zeilenfrequente, in ihrer.

Breite vertikalfrequent modulierte Rechteckimpulse liefert. Es ist bekannt, daß zur Rücklieferung von Energie eine Diode an die Einkoppelspule geschaltet ist, die in dieser gespeicherte Energie in eine Versorgungsspannungsquelle des Fernsehempfängers liefert. Es ist bekannt, zur Gegenkopplung der genannten Stufe das digitale Rechtecksignal über ein RC-Glied in ein rasterfrequentes parabelförmiges Signal umzuformen. Es istauch bekannt, das digitale Rechtecksignal über ein LC-Glied zu einem rasterfreqeuenten parabelförmigen Analogsignal zu integrieren, welches zur Gegenkopplung der Schaltstufe dient als auch der Einkoppelspule zur Modulation des Ablenkstroms zugeführt wird.

Die erstgenannte Schaltung ist zwar kostengünstiger als die zweite, hat jedoch den Nachteil, daß der Strom durch die Einkoppelspule während der gesperrten Phase der Schaltstufe wegen der zur Energierückgewinnung dienenden Diode nur eine einzige Richtung annehmen kann. Hierdurch wird der Modulationsgrad der Diodenmodulatorsschaltung stark eingeengt. Man kann diesen durch Erhöhung der Brückenspannung des Diodenmodulators zwar wieder vergrößern, was jedoch den Wirkungsgrad der Schaltung verschlechtert.

Die zweite Schaltung mit dem LC-Glied erlaubt zwar beide Stromrichtungen in der Einkoppelspule wegen des Kondensators im Integrationsglied, so daß der volle Modulationsgrad des Dioden-Modulators ausgenutzt werden kann. Diese Lösung ist jedoch wegen der verwendeten Bauteile (Induktivität und Kapazität) nicht sehr kostengünstig.

### Aufgabe

Der Erfindung liegt deshalb die Aufgabe zugrunde, eine Schaltung aufzubauen, die die Vorteile, nämlich kostengünsige Lösung der einen unter Beibenhaltung des vollen möglichen Modulationsgrades der anderen Schaltung vereinigt. Diese Aufgabe wird durch die in dem Patentanspruch angegebene Maßnahme gelöst.

### Beschreibung

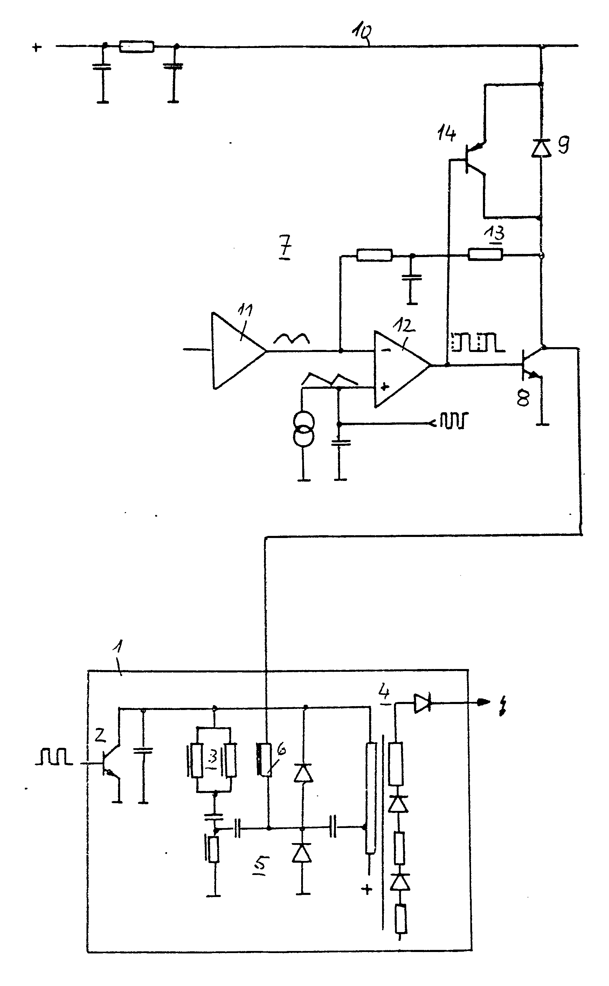

Nachstehend soll mit Hilfe der Zeichnung die Erfinding beschrieben werden.

Mit 1 ist die Zeilenendstufe eines Fernsehempfängers angedeutet mit dem Zeilenendstufentransistor 2, den Horizontalablenkspulen 3, dem Zeilentransformator 4 und dem zur Korrektur der Ost-West-Kissenverzerrungen dienenden Diodenmodulator 5, dessen Wirkungsweise in der genannten DE—PS beschrieben ist.

Der Diodenmodulator 5 besitzt eine Einkoppelspule 6, an welche mit Hilfe einer Steuerschaltung 7 erzeugte, zeilenfrequente, rasterfrequent modulierte Rechteckimpulse gelegt sind, die über die Einkoppelspule 6 den benötigten Modulationsstrom erzeugen. In der nichtleitenden Phase des Schalttransistors 8 der Steuerschaltung 7 wird die in der Einkoppelspule 6 gespeicherte Energie über eine Diode 9 an eine Betriebsspannungsquelle 10 des Fernsehempfängers zurückgeliefert. Der Schalttransistor 8 wird in der bekannten Weise durch zeilenfrequente Rechteckimpulse, die in ihrer Breite rasterfrequent moduliert sind, geschaltet. Zur Erzeugung der zeilenfrequenten Impulse dient der Parabelspannungsgenerator 11 in Verbindung mit dem Differenzverstärker 12, indem an seinen invertierenden Eingang die vertikalfrequente Parabelspannung und an den nichtinvertierenden Eingang eine zeilenfrequente Sägezahnspannung gelegt sind. Es erfolgt eine Gegenkopplung 13 vom Kollektor des Schalttransistors 8 zum invertierenden Eingang des Differenzverstärkers 12. Erfindungsgemäß liegt über der Diode 9 die Schaltstrecke eines elektronischen Schalters 14, z.B. ein Transistor, der während der gesperrten Phase des Transistors 8 einen dem Diodenstrom entgegengesetzten Strom aus der Betriebsspannungsquelle 10 in die Einkoppelspule 6 erlaubt. Der elektronische Schalter wird zweckmäßigerweise von der gleichen Steuerspannung beeinflußt wie der Schalttransistor 8.

Da der Transistor 14 sehr klein sein kann, kann er zusammen mit der Diode 9 in die Steuerschaltung 7 integriert werden.

### Patentanspruch

Schaltungsanordnung zur Korrektur von O-W-Kissenverzerrungen auf dem Bildschirm eines Fernsehempfängers mit einem Diodenmodulator (5), der von einer durch ein zeilenfrequentes, rasterfrequent moduliertes Rechtecksignal geschalteten Stufe (8) über eine Einkoppelspule (6) gesteuert wird, sowie mit einer an die Einkoppelspule (6) angeschalteten, zur Rücklieferung von gespeicherter Energie in eine Versorgungsspannungsquelle des Fernsehempfängers dienenden Diode (9), dadurch gekennzeichnet, daß der Diode (9) ein elektronischer Schalter (14) parallelgeschaltet ist, an dessen Steuerelektrode das Rechtecksignal gelegt ist, und die Polarität der Schaltstrecke zu derjenigen der Diode (9) entgegengesetzt ist, so daß der Schalter (14) während der Nichtleitphase der geschalteten Stufe (8) einen dem Diodenstrom entgegengesetzt gerichteten Strom durch die Einkoppelspule (6) erlaubt.

### Revendication

Circuit pour la correction de distorsions en coussin estouest sur l'écran d'un récepteur de télévision, comportant un modulateur-redresseur commandé, par l'intermédiaire d'une bobine de couplage, par un étage commandé par un signal rectangulaire à fréquence de ligne modulé à fréquence de trame, ainsi qu'une diode, connectée à la bobine de couplage, servant à la restitution d'énergie emmagasinée vers une source de tension d'alimentation du récepteur de télévision, caractérisé en ce qu'est monté en parallèle sur la diode (9) un commutateur électronique (14), dont l'électrode de commande reçoit le signal rectangulaire, et en ce que ce commutateur (14) conduit le courant en sens opposé à celui de la diode (9), de telle sorte que ce commutateur (14) laisse passer, vers la bobine de couplage (6), pendant le phase de non-conduction de l'étage commandé (8), un courant de sens inverse à celui de la diode.

**Claim**

A circuit arrangement for correcting pincushion distortion on the screen of a television receiver with a diode modulator (5), which is controlled via an input coupling coil (6) by a stage (8) switched by a line-frequency rectangular signal which is modulated at raster frequency, and with a diode (9) connected up to the input coupling coil (6) and serving to return stored energy into a supply voltage source of the television receiver, characterised in that an electronic switch (14) is connected in parallel with the diode (9), the rectangular signal being applied to the control electrode of switch (14), and the polarity of the contract-break is opposite to that of the diode (9), so that the switch (14) permits through the input coupling coil (6) a current which is oppositely directed to the diode current during the nonconductive phase of the connected stage (8).

0 103 709